Europäisches Patentamt

European Patent Office

Office européen des brevets

(11) Veröffentlichungsnummer: **0 526 814 A2**

# EUROPÄISCHE PATENTANMELDUNG

(21) Anmeldenummer: **92112677.7**

(22) Anmeldetag: **24.07.92**

(51) Int. Cl.5: **B29C 51/00**, B29C 51/14, B29C 47/06, //B29K77:00

(30) Priorität: **06.08.91 DE 4125982**

(43) Veröffentlichungstag der Anmeldung:
**10.02.93 Patentblatt 93/06**

(84) Benannte Vertragsstaaten:
**AT BE CH DE DK ES FR GB IT LI NL**

(71) Anmelder: **Wolff Walsrode Aktiengesellschaft Postfach**
**W-3030 Walsrode 1(DE)**

(72) Erfinder: **Witte, Harry, Dipl.-Ing.**
**Hangweg 10**
**W-3036 Bomlitz(DE)**

(74) Vertreter: **Braun, Rolf, Dr. et al**
**c/o Bayer AG Konzernverwaltung RP Patente Konzern**
**W-5090 Leverkusen 1 Bayerwerk(DE)**

(54) **Polyamidhaltige Verbundfolie mit gleichmässiger Dicke nach dem Tiefziehen.**

(57) Die vorliegende Erfindung betrifft eine Verbundfolie aus einer oder mehreren Schichten Polyamid (PA) sowie einer oder mehreren olefinischen Schichten, die durch Coextrusion, Klebstoffkaschierung oder Extrusionsbeschichtung oder Extrusionskaschierung miteinander verbunden sind und für das Verformen auf sogenannten Form-, Füll- und Verschließmaschinen besonders gut geeignet sind.

EP 0 526 814 A2

Die vorliegende Erfindung betrifft eine Verbundfolie aus einer oder mehreren Schichten Polyamid (PA) sowie einer oder mehreren olefinischen Schichten, die durch Coextrusion, Klebstoffkaschierung oder Extrusionsbeschichtung oder Extrusionskaschierung miteinander verbunden sind und für das Verformen auf sogenannten Form-, Füll- und Verschließmaschinen besonders gut geeignet sind.

Tiefziehbare PA/Polyolefin, insbesondere Polyethylen-Verbundfolien sind bekannt und werden im großen Umfang in der lebensmittelverarbeitenden Industrie, insbesondere auf dem Fleisch- und Käsesektor sowie für Fertiggerichte und Backwaren eingesetzt (vergl. z.B. Kunststoffe 79, (1989), S. 818 ff).

Hauptsächlich abhängig von den Herstellbedingungen der Verbundfolie ist es immer wieder zu beobachten, daß nach dem Tiefziehvorgang die ausgeformten Mulden Spleißerscheinungen zeigen, d.h. in Fertigungsrichtung der Folie liegen dicke und dünne Folienbereiche nebeneinander. Die Muldenform ist ungleichmäßig verformt und zeigt somit ein unterschiedliches mechanisches Verhalten, unterschiedliche Barriereeigenschaften und außerdem ein unruhiges, welliges Erscheinungsbild.

Die Ursache des Spleißens kann, soweit bekannt, zwei Ursachen haben:

a) Durch sogenannte Düsenlinien, d.h. Längsstreifen, die beim Ausformen der Schmelze aus dem Gießer entstehen und gewisse Sollbruchstellen bilden, die dann beim Verformen die Folie ungleichmäßig verdünnen und dann als "Spleißer" besonders im Seiten- und Bodenbereich der Mulden sichtbar werden. Dieser Effekt ist durch das Säubern der Düse weitgehend zu beseitigen.

b) Durch nicht restlos aufgeschlossene kristalline Anteile in der PA-Schmelze, die sich in Längsrichtung der Folie, d.h. in Fertigungsrichtung orientieren und somit nebeneinander liegende Folienbereiche bilden, die ein unterschiedliches Verhalten beim Tiefziehen aufweisen.

Ein derartiger Verbund zeigt äußerlich keine Mängel und das Ergebnis ist erst nach dem Tiefziehen ersichtlich. Eine Untersuchungs-Methode zur Vorhersage von Spleißen ist die Röntgenweitwinkeluntersuchung.

Mit Hilfe äquatorialer Intensitätsdiagramme lassen sich der Kristallisationszustand und mit azimutalen Intensitätsdiagrammen die Orientierung der $\gamma$- und $\alpha$-Kristalle deutlich machen.

Das Auftreten derartiger Vororientierungen von $\gamma$- oder $\alpha$-Kristallen kann als Maßstab für ungenügende Tiefziehbarkeit bzw. Spleißen herangezogen werden.

Allerdings ist diese Methode nur bei nicht nukleierten PA-Rohstoffen anwendbar. An Folien, die aus nukleierten PA-Rohstoffen hergestellt sind, ist die Röntgenweitwinkeluntersuchung nur bedingt anwendbar.

Es ist noch hinzuzufügen, daß bei geringen Ziehtiefen die Spleißerscheinung stärker in Erscheinung tritt als bei größeren Ziehtiefen. Dies ist dadurch zu erklären, daß die dünneren Bereiche eher ausgereckt sind und somit den noch dickeren Bereichen die Möglichkeit der weiteren Ausreckung, d.h. Verdünnung gegeben ist, solange der Verformungsvorgang nicht abgeschlossen ist.

Da die unter a) und b) aufgezeigten Erscheinungen bzw. Mängel nie ganz auszuschließen sind, bestand Bedarf an einer Methode, die stets ein reproduzierbar gutes Ergebnis bringt, d.h. spleißfrei geformte Mulden unabhängig von der Ziehtiefe ergibt.

Aufgabe der vorliegenden Erfindung war es daher, spleißfreie Polyamid-haltige Verbundfolien sowie ein Verfahren zur Verfügung zu stellen, das es erlaubt, die Spleißbildung zuverlässig zu verhindern.

Gegenstand der vorliegenden Erfindung ist eine spleißfreie Verbundfolie aus zwei oder mehreren miteinander durch Klebstoffkaschierung, Extrusionskaschierung, Coextrusion oder Coextrusionsbeschichtung bzw. Coextrusionskaschierung hergestellten Schichten, wobei mindestens eine Schicht aus Polyamid besteht, dadurch gekennzeichnet, daß die Polyamidschicht 5 bis 95 Gew.-% amorphes Polyamid enthält.

Spleißfreie Verbundfolien aus zwei oder mehreren miteinander durch Klebstoffkaschierung, Extrusionskaschierung, Coextrusion oder Coextrusionsbeschichtung bzw. Coextrusionskaschierung hergestellten Schichten, wobei mindestens eine Schicht aus Polyamid besteht, dadurch gekennzeichnet, daß die Polyamidschicht 5 bis 95 Gew.-% amorphes Polyamid enthält.

Gegenstand der Erfindung ist ferner ein Verfahren zur Herstellung solcher spleißfreier Folien.

Erreicht wird diese spleißfrei tiefziehbare Verbundfolie durch die Abmischung von teilkristallinem Polyamid mit amorphen Polyamiden im Mischungsverhältnis von 95 : 5 bis 5 : 95, vorzugsweise 85 : 15 Gew.-%.

Als teilkristalline Polyamide werden PA 6 und PA 6.6, vorzugsweise PA 6 eingesetzt. Als amorphe Polyamide eignen sich z.B. Selar-PA® 3426 von Du Pont oder Novamid® X 21 von Mitsubishi Chemical Ind. oder Grivory G 21 von Emser Werke.

Dieses derart abgemischte Polyamid wird als Blas- oder Gießfilm hergestellt und mit den herkömmlich bekannten Methoden mit entsprechenden Haft- und Siegelschichten zu einer Verbundfolie verarbeitet.

Besonders bevorzugt wird eine derartige Verbundfolie nach dem Multilayer-Flachfilm-Coextrusionsverfahren hergestellt.

Neben Polyamid-Schichten können weitere Schichten als Kleb-, Kaschier- und/oder Siegelschicht eingesetzt werden. Derartige Schichten können beispielsweise aus verschiedenen Polyethylenen, Methacrylsäure, Ethylenacrylsäure, Ethylenvinylacetat, Ethylenethylacrylat, Ethylenmethylacrylat, Vinylacetat, Ethylenbutylacrylat, Polypropylen, Polyurethan und Ionomeren aufgebaut sein.

Der Gegenstand der Erfindung soll anhand der folgenden, beispielhaften Ausführungsformen näher erläutert werden.

Beispiele

Beispiel 1

Eine nach dem bevorzugten Multilayer-Flachfilm-Coextrusionsverfahren hergestellte PA-PE-Verbundfolie für spleißfrei tiefziehbares Thermoformen ist beispielsweise folgendermaßen aufgebaut, wobei die Gesamtdicke 50 bis 500 µm betragen kann.

Bei den verwendeten Materialien zum Aufbau der einzelnen Schichten handelt es sich um folgende:

| | |
|---|---|
| LLDPE | = Polyethylen (linear low density polyethylene) |
| LDPE | = Polyethylen (low density polyethylene) |
| MSA | = Methacrylsäure |
| EAA | = Ethylenacrylsäure |
| EVA | = Ethylenvinylacetat |
| EEA | = Ethylenethylacrylat |
| VAc | = Vinylacetat |
| I | = Ionomere (Zn oder Na) |
| EBA | = Ethylenbutylacrylat |
| PP | = Polypropylen |
| COPP | = mit Ethylen modifiziertes Polypropylen |
| EMA | = Ethylenmethylacrylat |

Schicht 1:
85 Gew.-% PA 6 der Viskosität 2,8 bis 4,8 ($\eta$ rel.)
15 Gew.-% amorphes PA, trocken als Granulatmischung.

Schicht 2:
Haftvermittler auf LLDPE-Basis, modifiziert mit MSA, gegebenenfalls noch abgemischt mit LDPE im Verhältnis 50 : 50 Gew.-%.

Schicht 3:
85 Gew.-% PA 6 (wie Schicht 1)
15 Gew.-% amorphes PA, trocken als Granulatmischung.

Schicht 4:
Haftvermittler auf LLDPE-Basis, modifiziert mit MSA, gegebenenfalls noch abgemischt mit LDPE im Verhältnis 50 : 50 Gew.-%, wobei die Schichten 1 bis 4 gemeinsam in einen Coextrusionsadapter zusammengeführt werden und anschließend durch eine Einschichtdüse auf eine Chillrollwalze ausgetragen und abgekühlt werden. Dieser Mehrschichtverbund wird weitergeführt und in line auf der Schicht 4 mit einer ebenfalls coextrudierten Siegelschicht beschichtet wie folgt:

Schicht 5:
LDPE/EAA oder sonstige polyolefinische Stoffe in reiner Form oder als Abmischung.

Schicht 6:
EVA mit 2 bis 10 % VAC, vorzugsweise 5 % VAC, Ionomere (Zn oder Na), EAA, EEA, EBA, EMA, PP, CoPP

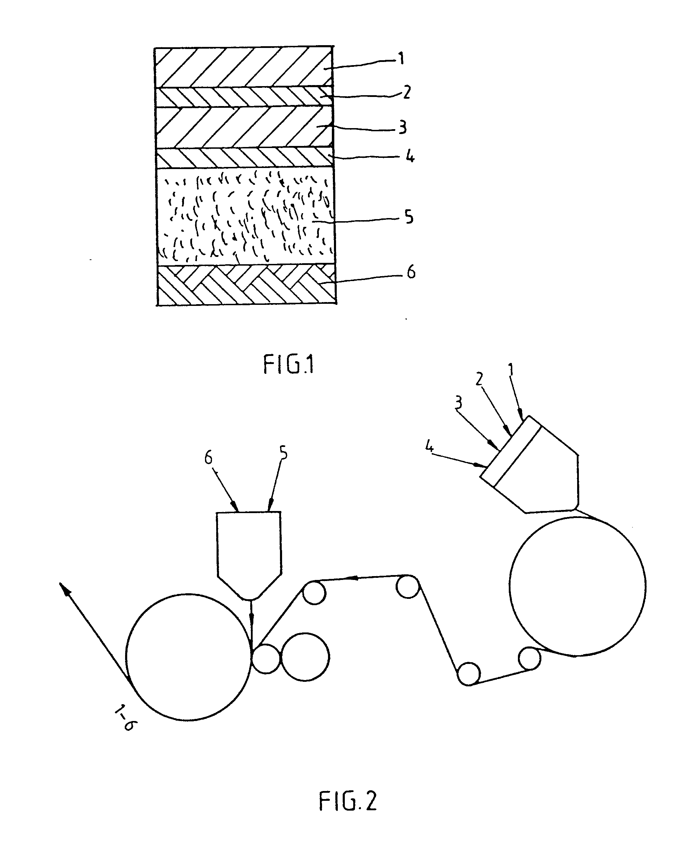

In Fig. 1 ist eine derart hergestellte Folie im Querschnitt dargestellt (1 bis 6 bedeuten die einzelnen Schichten).

In Fig. 2 ist das Herstellverfahren schematisch dargestellt. Derartig hergestellte Verbundfolien werden zu Großrollen aufgewickelt und anschließend in die für Tiefziehmaschinen benötigten Breiten aufgetrennt.

Beispiel 2

Ausführung mit vorgefertigten Siegelschichten, die durch Extrusionskaschierung mit den Schichten 1 bis 4 verbunden werden. Hierbei haben die Schichten 1 bis 4 den gleichen Aufbau wie in Beispiel 1 genannt.

Die Schichten 5 bis 6 dienen in diesem Falle in Form einer Schmelzenfahne als Verbindungsschicht zwischen dem Trägerfilm 1 bis 4 und der zulaufenden, vorgefertigten Folie, der Schicht 7. Die Schichten 5 bis 6 werden in diesem Falle aus polyolefinischen Stoffen gebildet, vorzugsweise LDPE.

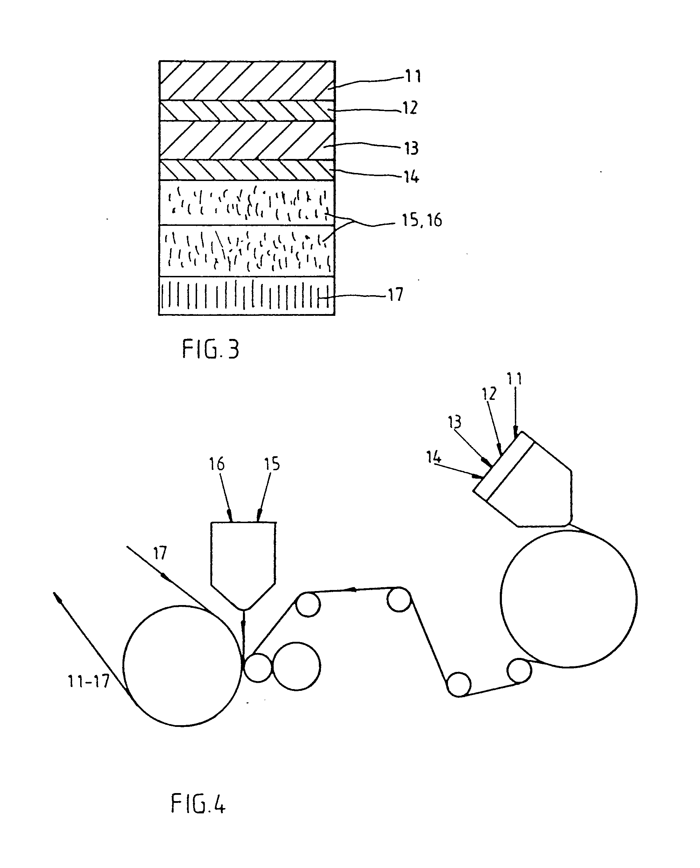

In Fig. 3 ist eine derart hergestellte Folie im Querschnitt dargestellt (11 bis 17 stellen die einzelnen Schichten dar).

In Fig. 4 ist das Herstellverfahren schematisch dargestellt.

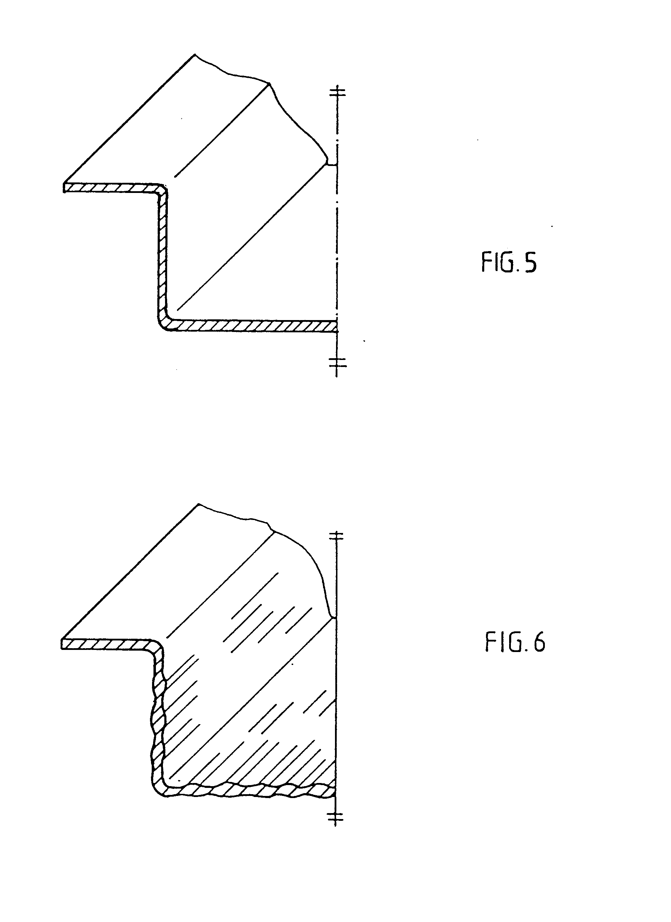

In Fig. 5 ist schematisch die Ausformung eines Muldenteilstückes aus einer entsprechend der Erfindung hergestellten PA/PE-Verbundfolie dargestellt.

In Fig. 6 ist schematisch die Ausformung eines Muldenteilstückes aus PA/PE-Verbundfolie dargestellt, wie sie sich im allgemeinen ohne PA-Modifizierung ergeben.

Beispiel 3

Es wurden für Vergleichsmessungen PA/PE-Verbundfolien durch Klebstoffkaschierung mit verschiedenen Abmischungsverhältnissen des PA 6 mit amorphem PA unter gleichen Bedingungen hergestellt.

Die Kaschierbedingungen, der Kleber sowie die PE-Siegelschicht waren identisch.

Nach Fertigstellung der Verbundfolien wurden diese unter gleichen Bedingungen auf einer Tiefziehmaschine verformt.

Die derart hergestellten Tiefziehmulden wurden vergleichend beurteilt, siehe Tabelle:

Folienaufbau:

$$\textbf{PA-Mischung} \quad / \quad \textbf{Kleber} \quad / \quad \textbf{Polyethylen}$$
$$60 \ \mu m \qquad\qquad 2 \ g/m^2 \qquad\qquad 100 \ \mu m$$

Polyethylen: LDPE (Schmelzindex 1,5, Dichte 0,923)
Kleber: PUR-Basis
Muldengröße: 115 x 180 x 50 mm, Tiefziehtemperatur 80°C BreitexLängexTiefe

| PA-Mischung | Muldenschrumpf | Optik | Spleißer | Gesamtbeurt. |
|---|---|---|---|---|
| 100 % PA (Krist.) | sofort nach Verlassen Formstation | 4 | 3 | 3/4 |
| 90 % PA → 10 % PA amorph | weniger als Nullprobe. Mulde formt besser aus | 2 | 2 | 2 |
| 89 % 11 % | " | 2 | 2 | 2 |
| 88 % 12 % | " | 2 | 1/2 | 2 + |
| 87 % 13 % | " | 2 | 1 | 1/2 |
| 86 % 14 % | kein Schrumpf opt.Mulde | 1/2 | 1 | 1/2 |
| 85 % 15 % | " | 1/2 | 1 | 1/2 |

Als krist. Polyamid wurde Durethan® B 38 FKS der Bayer AG und als amorphes Polyamid Selar® PA 3426 der Firma Du Pont, USA, eingesetzt.

**Patentansprüche**

1. Spleißfreie Verbundfolie aus zwei oder mehreren miteinander durch Klebstoffkaschierung, Extrusionskaschierung, Coextrusion oder Coextrusionsbeschichtung bzw. Coextrusionskaschierung hergestellten Schichten, wobei mindestens eine Schicht aus Polyamid besteht, dadurch gekennzeichnet, daß die Polyamidschicht 5 bis 95 Gew.-% amorphes Polyamid enthält.

2. Verbundfolie gemäß Anspruch 1, dadurch gekennzeichnet, daß als weitere Schicht eine Polyethylenschicht vorliegt.

3. Verfahren zur Herstellung von spleißfreien Verbundfolien gemäß einem der Ansprüche 1 oder 2, dadurch gekennzeichnet, daß die Folien durch Coextrusion hergestellt werden.

FIG.1

FIG.2

FIG.3

FIG.4

FIG. 5

FIG. 6